# EUROPÄISCHE PATENTANMELDUNG

(11) **EP 2 335 532 A1**
(43) Veröffentlichungstag der Anmeldung: **22.06.2011**
(21) Anmeldenummer: 10015351.9
(22) Anmeldetag: 07.12.2010
(51) Int. Cl.: A47J 31/52

(54) **Haushaltgerät**

(30) Priorität: 17.12.2009 DE 102009059175
(71) Anmelder: Severin Elektrogeräte GmbH, 59846 Sundern (DE)
(72) Erfinder: Hilckmann, Marius, 58453 Witten (DE); Voigt, Christian, 46504 Xanten (DE)
(74) Vertreter: Köchling, Conrad-Joachim

(57) **Zusammenfassung**

Um ein elektrisches Haushaltsgerät, insbesondere mit einer elektronischen Steuerungsvorrichtung für unterschiedliche Bedienfunktionen durch Auslösung von entsprechenden Schaltelementen, sowie mit einem akustischen Signalgeber, zu schaffen, bei dem unterschiedliche, für den Benutzer angenehme akustische Signale erzeugt werden können, wird vorgeschlagen, dass der Signalgeber ein elektronischer Klangerzeuger ist, mittels dessen Töne unterschiedlicher Schall-Frequenzen und/oder - amplituden erzeugbar sind.

## Beschreibung

Die Erfindung betrifft ein elektrisches Haushaltsgerät, vorzugsweise ein Getränkezubereitungsgerät, insbesondere mit einer elektronischen Steuerungsvorrichtung für unterschiedliche Bedienfunktionen durch Auslösung von entsprechenden Schaltelementen, sowie mit einem akustischen Signalgeber.

Bekannte elektrische Haushaltsgeräte, insbesondere Getränkezubereitungsgeräte weisen Steuerungsanordnungen auf, über die Bedienungsfunktionen und Programmfunktionen vom Benutzer mechanisch und/oder elektronisch eingegeben werden können. Bei der Bedienung von Mikrocomputer unterstützten Geräten wird üblicherweise über digitale Ein- beziehungsweise Ausgänge mit einem Mikrocomputer kommuniziert. Hierbei wird zur Auswahl und Aktivierung einer Bedienfunktion oder einer Programmfunktion vom Benutzer ein entsprechender Drehwahlschalter, Tastenschalter oder elektronisch arbeitende Berührungs-, Folien- oder Kurztastschalter betätigt. Es ist ferner im Stand der Technik bekannt, entsprechende Bedienfunktionen oder Gerätefunktionen durch optische oder akustische Anzeige zu verdeutlichen, um die gewählte Funktion bekannt zu machen. Üblich sind dabei als akustische Einrichtungen Summer, die verschiedene Töne ausgeben können. Auch ist es bekannt, entsprechende Bedienfunktionen akustisch in der Weise anzuzeigen, dass die akustische Anzeige mittels eines Sprachgenerators und eines Lautsprechers erfolgt, so dass die gewählte Bedienfunktion sprachlich wiedergegeben wird.

Ausgehend von diesem Stand der Technik liegt der Erfindung die Aufgabe zugrunde, ein Haushaltsgerät gattungsgemäßer Art zu schaffen, bei dem unterschiedliche, für den Benutzer angenehme akustische Signale erzeugt werden können.

Zur Lösung dieser Aufgabe schlägt die Erfindung vor, dass der Signalgeber ein elektronischer Klangerzeuger ist, mittels dessen Töne unterschiedlicher Schall-Frequenzen und/oder - amplituden erzeugbar sind.

Bevorzugt ist vorgesehen, dass der Signalgeber ein elektronischer Klangerzeuger ist, mittels dessen Töne unterschiedlicher Tonhöhe und/oder unterschiedlicher Schallwellenformen und/oder Lautstärken oder Lautstärkehüllkurven erzeugbar sind.

Zudem ist bevorzugt, dass unterschiedlichen Bedienfunktionen unterschiedliche akustische Signale zugeordnet sind, die beispielsweise in einem elektronischen Speicher als elektronische Information abgelegt sind, und dass die elektronischen Informationen in Form unterschiedlicher akustischer Signale durch die Schaltelemente auslösbar sind, die durch die Bedienfunktionen angesteuert sind.

Auch kann bevorzugt sein, dass der Signalgeber mittels gespeicherter Wellenformen für eine sprachliche Informationsangabe ausgelegt ist.

Bei der erfindungsgemäßen Lösung wird zur akustischen Signalgabe eine Klangerzeugung eingesetzt, die in der Lage ist, simultan Töne verschiedener Tonhöhen und/oder unterschiedlicher Wellenformen und/oder Lautstärken und Lautstärkehüllkurven wiederzugeben. Hierdurch kann für den Benutzer ein sehr angenehmer Höreindruck erzeugt werden. Auch lassen sich hierdurch Signale deutlich voneinander unterscheiden, um die Zuordnung des Signals beziehungsweise der Tonfolge oder des Klangs zu der zu übermittelnden bestimmten Information zu erleichtern. Für eine Ausgestaltung der Erfindung wird die Klangerzeugung dahingehend erweitert, dass auch Text in Form von Sprache ausgegeben werden kann, insbesondere mittels aufgenommener Wellenformen.

Die Erfindung ist insbesondere in Getränkezubereitungsgeräten in vielfacher Weise einsetzbar.

Bevorzugt ist dabei vorgesehen, dass der Klangerzeuger unterschiedliche Schallwellen erzeugt, die überlagert simultan als polyphone Töne wiedergegeben werden.

Bisher übliche Summer können zwar Töne unterschiedlicher Frequenzen wiedergeben, jedoch nicht gleichzeitig als polyphone Töne. Durch die erfindungsgemäße Ausgestaltung können verschiedene Schallwellen überlagert werden und als polyphones Klangbild wiedergegeben werden.

## Patentansprüche

1. Elektrisches Haushaltsgerät, vorzugsweise Getränkezubereitungsgerät, insbesondere mit einer elektronischen Steuerungsvorrichtung für unterschiedliche Bedienfunktionen durch Auslösung von entsprechenden Schaltelementen, sowie mit einem akustischen Signalgeber,
**dadurch gekennzeichnet, dass** der Signalgeber ein elektronischer Klangerzeuger ist, mittels dessen Töne unterschiedlicher Schall-Frequenzen und/oder -amplituden erzeugbar sind.

2. Elektrisches Haushaltsgerät, insbesondere nach Anspruch 1,
**dadurch gekennzeichnet, dass** der Signalgeber ein elektronischer Klangerzeuger ist, mittels dessen Töne unterschiedlicher Tonhöhe und/oder unterschiedlicher Schallwellenformen und/oder Lautstärken oder Lautstärkehüllkurven erzeugbar sind.

3. Elektrisches Haushaltsgerät nach Anspruch 1 oder 2, **dadurch gekennzeichnet, dass** unterschiedlichen Bedienfunktionen unterschiedliche akustische Signale zugeordnet sind, die beispielsweise in einem elektronischen Speicher als elektronische Information abgelegt sind, und dass die elektronischen Informationen in Form unterschiedlicher akustischer Signale durch die Schaltelemente auslösbar sind, die durch die Bedienfunktionen angesteuert sind.

4. Elektrisches Haushaltsgerät nach einem der Ansprüche 1 bis 3,
**dadurch gekennzeichnet, dass** der Signalgeber mittels gespeicherter Wellenformen für eine sprachliche Informationsangabe ausgelegt ist.

5. Elektrisches Haushaltsgerät nach einem der Ansprüche 1 bis 4,
**dadurch gekennzeichnet, dass** der Klangerzeuger unterschiedliche Schallwellen erzeugt, die überlagert simultan als polyphone Töne wiedergegeben werden.
